# EUROPEAN PATENT SPECIFICATION

(11) **EP 0 876 787 B1**
(45) Date of publication and mention of the grant of the patent: **12.12.2001**
(21) Application number: 98610012.1
(22) Date of filing: 05.05.1998
(51) Int. Cl.: A47J 42/00, A47J 42/46

(54) **A condiment grinder**
Gewürzmühle
Moulin à épices

(30) Priority: 06.05.1997 DK 19197
(43) Date of publication of application: 11.11.1998
(73) Proprietor: Pedersen, Bennie Peder Smiszek, 4690 Haslev (DK)
(72) Inventor: Pedersen, Bennie Peder Smiszek, 4690 Haslev (DK)
(74) Representative: Sundien, Thomas

(56) References cited:
- EP-A- 0 535 493
- WO-A-87/03187
- WO-A-91/08697
- DE-A- 3 430 196
- FR-A- 372 595

## Description

The present invention relates to a multiple condiment grinder according to the preamble of claim 1, comprising a housing having: a first end and a second end and at least two compartments for a respective condiment, at least two grinding tools, each of said grinding tools being associated with a corresponding compartment for a respective condiment, said at least two grinding tools each comprising a first tool part and a second tool part, the second tool part being rotatable about an axis with respect to the first tool part, drive means adapted for driving the second tool part of a selected one of said at least two grinding tools, and outlet means for ground condiment, said outlet means being arranged at said second end of the housing.

Such a grinder is known from patent document WO 87/03187. This grinder is cumbersome in use in that the outlet of one condiment is displaced to one side with respect to the outlet for the other condiment. The width of the grinder and the arrangement of the outlets are such that the user will be required to shift the position of the grinder to one side depending on which condiment is being displaced, making targeting of the dispensed ground condiment cumbersome.

The present invention seeks to provide an improved multiple condiment grinder of the above stated type, in which a more accurate dispensing may be achieved, and which may be manufactured at lower costs, while still allowing the ground condiment to be dispensed from one end of the grinder so that the different condiments may be filled into the grinder from one end and preferably, at any time, through gravity, be kept close to the grinding tool ready for use.

This object as well as other object are achieved by a condiment grinder as disclosed in the claims, whereby the grinding tools are arranged such that the second rotatable tool parts rotate about a common axis.

According to a further embodiment, the compartments may be ring-shaped, one compartment encircling the other. This solution makes manufacture of the grinder particularly simple. In this context, the term "ring-shaped" refers to a compartment which describes a ring when seen in a cross-sectional view.

According to an even further embodiment, allowing for a simple use of the grinder, the housing comprises at least one tubular part for receiving said grinding tools, a lid part being arranged at said first end of the housing and forming a drive means for at least one of said second rotatable tool parts. In this manner, the user activates the grinder by holding the housing while rotating the lid part of the grinder.

Preferably, the user chooses which condiment to grind by turning the lid part either clockwise or anti-clockwise, as stated in claim 5.

According to a presently preferred embodiment, the grinder comprises a first elongated through-shaft and a second hollow elongated through-shaft, the first through-shaft being arranged within said second through-shaft and extending co-axially therewith, and the first and second through-shafts being operatively connected to a corresponding second rotatable tool part and to said corresponding drive means.

Preferably, the second, hollow elongated through-shaft comprises a first tool part of a first grinding tool and a second rotatable tool part of a second grinding tool.

The invention will now be explained in more detail with reference to the embodiments illustrated in the drawings.
Fig. 1 is a vertical cross-sectional view through a condiment grinder according to the invention,
Fig. 2 shows the grinder of fig. 1, seen from above,
Fig. 3 is a cross-sectional view along the line 3-3 in fig. 1,
Fig. 4 is a cross-sectional view along the line 4-4 in fig. 1, and
Fig. 5 is a view corresponding to fig. 1, but showing a different embodiment.

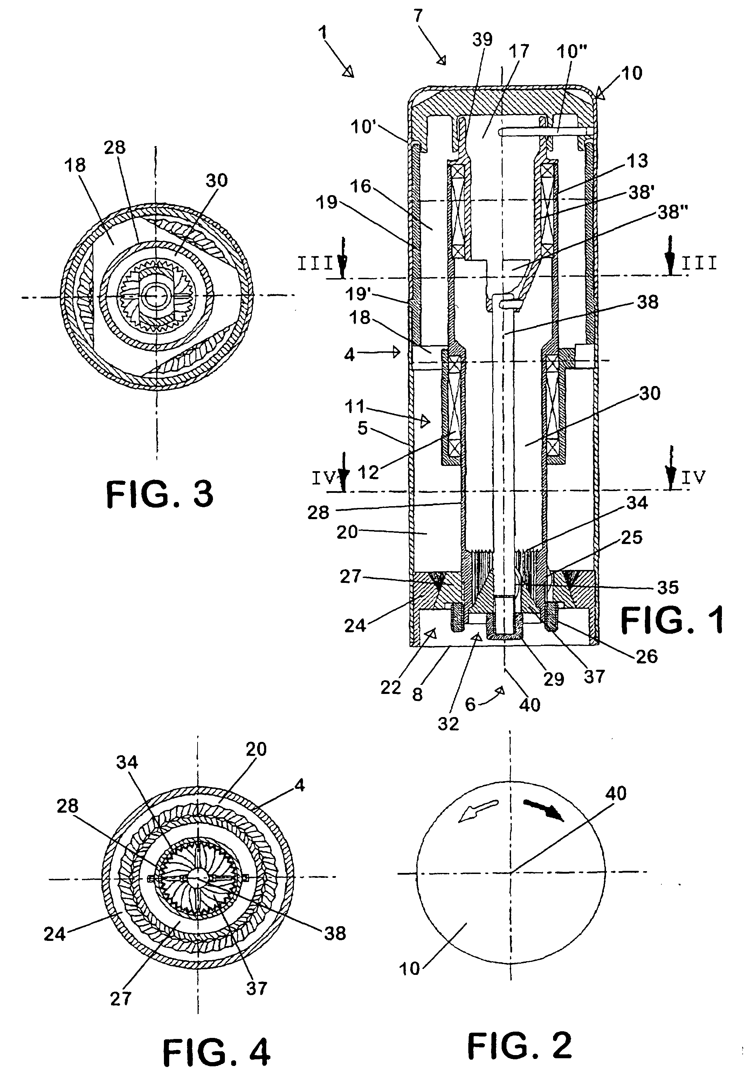

In fig. 1, the reference numeral 1 denotes the condiment grinder according to the invention. The grinder 1 is adapted for the selective grinding of two different condiment products, such as salt and pepper, which are stored in a granular form in separate compartments within the grinder. The grinder 1 has a first or upper end 7 and a lower or second end 6, the latter including an outlet 8 for ground condiment.

The grinder 1 generally comprises an outer cylindrical housing 4 defined by a wall 5, one end of the housing 4 defining the lower or second end 6 of the grinder 1. The lower end 6 provides an end face which may rest against a table or any other surface on which the grinder 1 is left when not in use. A lid part 10 is removably secured to the housing 4 at the end opposite the lower end 6, the lid part 10 defining a closure serving to seal the condiment within the separate compartments of the grinder 1 and allowing for filling of the compartments whenever desired. The lid part 10 is preferably formed as a cap with a flat upper surface as well as a cylindrical wall portion 10'.

Arranged within the housing 4 is a grinding unit 11 preferably formed as an integral element which may be inserted into the housing 4 from above and which may be fixed thereto in the manufacture of the grinder 1. The grinding unit 11 defines two condiment compartments 16, 20 and 17, 30 that are freely accessible from above, as viewed in fig. 1 and which are delimited at their lower end by a respective grinding tool for the condiment kept therein. The compartments and the condiment grinding tools will be explained in more detail later in the present description.

The grinding unit 11 comprises a tubular cylindrical part 19 of which a lower end bear against the inner surface of the upper part of the wall 5 of the housing 4 in a tightly fitting manner. The tubular part 19 and the housing 4 have a common axis 40. When correctly inserted into the housing 4, a small peripheral projection 19' on the tubular part 19 rests against the upper edge of the housing 4. Moreover, and when the lid part 10 is arranged as shown in fig. 1 so as to seal the compartments for the condiment, the cylindrical wall part 10' of the lid part 10 bears against the upper outer surface of the tubular part 19 of the grinding unit 11 in a loosely fitting manner so that a relative rotation of the lid part 10 with respect to the tubular part 19 is possible. Through snap-engagement (not shown), the lid part 10 may be locked to the tubular part 19 to prevent inadvertent detachment of the lid part 10.

The grinding unit 11 moreover comprises a hollow cylindrical elongated through-shaft 28 supported and engaged by a first bearing 12 so as to extend with its axis coincident with the central longitudinal axis 40 of the housing 4. The bearing 12 is fixedly connected to a set of spaced ribs 18 (see fig. 3) extending radially inwardly from the tubular part 19 and being formed integrally therewith. The bearing 12 is formed so as to allow rotation of the through-shaft 28 about the longitudinal axis 40 in only one specified direction with respect to the tubular part 19 and the housing 4. This may be achieved by means of eg. a conventional dog clutch such as the one described in the above international patent application.

As appears from fig. 1, a first elongated ring-shaped condiment compartment 16, 20 is formed in the area between the through-shaft 28 on the one hand and the tubular part 19 and the wall 5 on the other hand, the ribs 18 being spaced so as to allow communication between the upper part 16, which form a filling mouth of the compartment, and the lower part 20.

At the upper end, the elongated hollow through-shaft 28 comprises a further bearing 13 which supports and engages an upper hollow large diameter part 38' formed integrally with a further through-shaft 38 arranged centrally within the hollow through-shaft 28 and extending along the axis 40 of the housing 4. The bearing 13 is formed so as to allow free rotation of the further through-shaft 38 about the longitudinal axis 40 in only one direction with respect to the hollow through-shaft 28, this direction being in the opposite sense with respect to said specified direction of rotation of the hollow through-shaft 28. A further elongated annular or ring-shaped condiment compartment 30 is formed in the area between the two through-shafts 28 and 38, and a plurality of apertures 38" arranged in the large diameter part 38' of the shaft 38 allows communication between the compartment 30 and a space or filling mouth 17 defined by the large diameter part 38'.

For the purpose of the following discussion, and considering the directions indicated in fig. 2 which shows the grinder 1 as viewed from above, it will be assumed that the first bearing 12 permits anticlockwise rotation only of the shaft 28 with respect to the tubular part 19 while the further bearing 13 allows clockwise rotation of the shaft 38 with respect to the shaft 28. It will be understood, however, that the opposite relationship may apply.

At the upper end, the inner through-shaft 38 is provided with an extension 39 having a recess or similar means adapted to engage a rib-like or pin-like projection 10'' arranged on the inner side of the wall 10' of the lid part 10. When the lid part 10 is properly secured to the housing 4, the projection 10" automatically engages the inner through-shaft 38 via the extension 39. In this manner, rotational movement applied by the user of the grinder on the lid part 10 brings about rotation of the through-shaft 38.

During operation, the user holds the housing 4 firmly, and clockwise rotation of the lid part 10 about the axis will bring about clockwise rotation of the shaft 38, the bearing 12 preventing rotation of the shaft 28. If the user chooses to turn the lid part 10 in the anti-clockwise direction, the one-way bearing 13 will prevent a relative rotation of the shaft 38 with respect to the tubular shaft 28. Since, however, the bearing 12 supporting the tubular shaft 28 is adapted to permit relative rotation of the shaft 28 with respect to the tubular part 19 in the anti-clockwise direction, the inner shaft 38 and the outer shaft 28 will both rotate together in the anti-clockwise direction with respect to the tubular part 19.

The above features are employed for controlling a grinding tool 22, 32 associated with the lower end of each condiment compartment 16/20, 17/30. Each grinding tool 22, 32 is arranged at the end of the grinder 1 opposite the tubular part 19. The grinding tool 20 comprises a first tool part 24 and a second tool part 27. Likewise, the grinding tool 32 comprises a first tool part 34 and a second tool part 37. The grinding tool parts 24, 27, 34, 37 are preferably formed as toothed members, and a small spacing between the toothed members of each grinding tool permits the condiment contained in the respective compartment 16/20, 17/30 to be ground and to exit the grinder via an exit opening. The toothed members may be formed in any conventional manner as required.

During operation of the grinder, and as is conventional, the first tool part 24, 34 of each grinding tool is arranged so as to be movable with respect to the second tool part 27, 37 of the respective grinding tool.

As appears from fig. 1 and also fig. 4, the first tool part 24 of the grinding tool 22 is formed as a ring-shaped member fixedly secured to the inner side of the housing 4 and having radially inwardly projecting inclined grinding teeth. The second tool part 27 of the grinding tool 22 is likewise formed as a ring-shaped member having radially outwardly extending inclined teeth. The second tool part 27 is fixedly secured to the outer side of the hollow shaft 28 by means of a threaded ring-member 26 engaging an outer threaded part of the hollow shaft 28 as well as a rib-like projection 25 on the shaft 28 engaging a corresponding recess in the second tool part 27. Consequently, upon rotation of the shaft 28 about the axis 40, any condiment stored in the corresponding compartment 20 will be ground when the tool part 27 rotates about the axis 40 with respect to the fixed tool part 24. Once tightened, the ring-member 26 will prevent upward displacement of the unit 11 with respect to the housing 4. Fig. 4 shows the ring-shaped nature of the compartment 20 which extends along the periphery of the wall 5.

In the vicinity of the grinding tool part 27, the hollow through-shaft 28 carries a further first grinding tool part 34 in the form of radially inwardly projecting teeth machined along the inner periphery of the shaft 38 at the lower end 6. The grinding tool part 34 cooperates with a second tool part 37 fixedly secured to the periphery of the end of the through-shaft 38 by means of a nut 29 engaging the shaft 38 and a rib 35 such that rotation of the shaft 38 will lead to a corresponding rotation of the second tool part 37. The second tool part 37 is provided with radially outwardly extending inclined teeth, and the exact position of the nut 29 will determine the size of the gap between the tool parts 34 and 37.

When the grinding tool 22 is to be used for grinding noncorrosive matter such as pepper, any components of this tool 22 may be formed of eg. a ceramic material. In view of the properties of table salt, the tool parts 24, 27 of the grinding tool 22 as well as the shaft 38 are preferably formed from e.g. a plastics materiel, a ceramic material or any other suitable material, the compartment 20 preferably being used for storing table salt.

It will be readily understood from the above explanation that the user of the grinder, having decided which condiment he wishes to grind and to dispense, chooses the appropriate direction of rotation of the lid part 10, thereby driving the inner shaft 38 and, if the setting of the bearing 13 so allows, possibly also the outer shaft 28. In the latter case, the inner shaft 38 and the outer, hollow shaft 28 will rotate together and the grinding tool parts 34, 37 of the grinding tool 32 associated with the condiment in the inner compartment 30 will remain immovable with respect to one another, and none of said condiment will be ground or dispensed. The rotation of the outer shaft 28 will, however, bring about a rotational movement of the grinding tool part 27 with respect to the fixed tool part 24, and any condiment in the outer compartment 20 will be ground.

If the opposite sense of rotation is chosen, the bearing 13 will allow the inner shaft 38 to turn freely with respect to the hollow shaft 28 and no rotational movement is transmitted to the grinding tool part 27. Consequently, only the condiment within the inner compartment 30 is ground and dispensed.

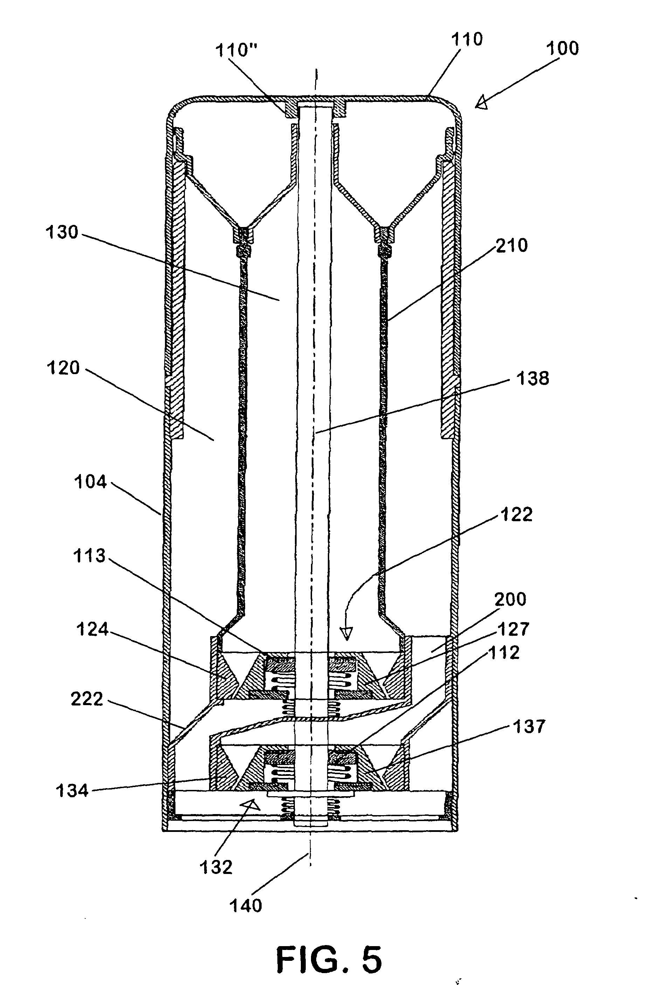

Fig. 5 shows an alternative embodiment of the invention in which two ring-shaped grinding tools 122, 132 are arranged within a housing, one above the another. Each grinding tool is associated with a respective compartment 120, 130 for a respective condiment, the compartments being open at the upper end to allow filling of the condiment into the grinder 1. The compartment 120 is preferably ring-shaped, being defined by the housing 104 on the one hand and by an elongated cylindrical member 210 on the other hand, as well as by a bottom wall 222 supporting the grinding tool 122 in part, the member 210 being arranged symmetrically about the central axis 140 of the housing. Each compartment 120, 130 communicates at the lower end with the corresponding grinding tool, and so does the ring-shaped compartment 130 via a channel 200 arranged in the bottom wall 222. The compartment 130 is defined by the elongated cylindrical member 210 and by a through-shaft 138.

Both grinding tools 122, 132 have first grinding tool parts 124, 134 immovably fixed with respect to the housing 104. The through-shaft 138 is secured to the housing 104 via a plurality of ribs (not shown) and maintained in this manner in a position extending centrally within the housing 104 so as to turn about a longitudinal axis 140. When a lid part 110 is attached to the housing 104, rotational movement thereof may be imparted to the shaft 138 via engagement means 110''. As will be seen, the shaft 138 carries the second grinding tool parts 127, 137 of each of the two separate grinding tools 122, 132. Through a suitable selection of the bearings 112, 113, the rotational movement of the shaft 138 is imparted to either the one or the other of the second grinding tool parts 127, 137, thereby providing for grinding and dispensing of the associated condiment. Preferably, dog clutches allowing rotation in one sense in bearing 112 and in the opposite sense in bearing 113 are used.

Obviously, the embodiment described with reference to fig. 5 provides a number of advantages in that the width or diameter of the grinder may be reduced even further, thereby permitting exact dispensing of the condiment from the lower end of the housing over the target area.

## Claims

1. A condiment grinder (1, 100) comprising a housing (4, 104) having:
- a first end (7) and a second end (6) and two compartments (16, 20; 17, 30; 120, 130) for a respective condiment,
- a first and a second grinding tool (22, 32; 122, 132), each of said grinding tools (22, 32; 122, 132) being associated with a corresponding compartment (16, 20; 17, 30; 120, 130) for a respective condiment,
- said two grinding tools (22, 32; 122, 132) each comprising a first tool pare (24, 34; 124, 134) and a second tool part (27, 37; 127, 137), the second tool part (27, 37; 127, 137) being rotaiable about an axis (40, 140) with respect to the first tool part (24, 34; 124, 134),
- drive means (10, 110) adapted for driving the second tool part (27, 37; 127, 137) of a selected one of said two grinding tools (26, 32; 126, 132),
- outlet means (8) for ground condiment, said outlet means (8) being arranged at said second end (6) of the housing (4, 104) and including a first discharge for ground condiment from said first grinding tool (22, 122) and a second discharge for ground condiment from said second grinding tool (32, 132), said first and second discharge each extending along a circular arc,
**characterized in**
- said grinding tools (22, 32, 122, 132) being arranged such that the second rotatable tool parts (27, 37; 127, 137) rotate about a common axis (40, 140), and
- said first discharge for ground condiment from said first grinding tool (22, 122) extending along a circular arc having a greater diameter that said second discharge for ground condiment from said second grinding tool (32, 132).

2. A condiment grinder (1, 100) comprising a housing (4, 104) having:
- a first end (7) and a second end (6) and two compartments (16, 20; 17, 30; 120, 130) for a respective condiment,
- a first and a second grinding tool (22, 32; 122, 132), each of said grinding tools (22, 32; 122, 132) being associated with a corresponding compartment (16, 20; 17, 30; 120, 130) for a respective condiment,
- said two grinding tools (22, 32; 122, 132) each comprising a first tool part (24, 34; 124, 134) and a second tool part (27, 37; 127, 137), the second tool part (27, 37; 127, 137) being rotatable about an axis (40, 140) with respect to the first tool part (24, 34; 124, 134),
- said first and second tool part together defining an essentially circular grinding area,
- drive means (10, 110) adapted for driving the second tool part (27, 37; 127, 137) of a selected one of said two grinding tools (26, 32; 126, 132),
- outlet means (8) for ground condiment, said outlet means (8) being arranged below said two grinding tools at said second end (6) of the housing (4, 104) such that ground condiment from said two compartments may leave said grinder at said second end,
**characterized in**
- said grinding tools (22, 32, 122, 132) being arranged such that the second rotatable tool parts (27, 37; 127, 137) rotate about a common axis (40, 140), and
- said essentially circular grinding area of said first grinding tool (22, 122) having a greater diameter than said essentially circular grinding area of said second grinding tool (32, 132).

3. A condiment grinder according to claim 1 or 2,
**characterized in that**
- said compartments (16, 20; 30; 120, 130) for a respective condiment are ring-shaped.

4. A condiment grinder according to any of the preceding claims,
**characterized in that**
- said housing (4, 104) comprises at least one tubular part (5) for receiving said grinding tools (22, 32; 122, 132), a lid part (10, 110) being arranged at said first end (7) of the housing (4, 104),
- said lid part (10, 110) forming a drive means for at least one of said second rotatable tool parts (27, 37; 127, 137).

5. A condiment grinder according to claim 4,
**characterized in that**
- said lid part (10, 110) forms a drive means for two of said second rotatable tool parzs (27, 37; 127, 137).

6. A condiment grinder according to claim 5,
**characterized in that**
- said lid part (10, 110) is rotatable with respect to said tubular part (5),
- said selection of one of said at least two grinding tools (22, 32; 122, 132) being performed by choosing the direction of rotation of the lid part (10, 110).

7. A condiment grinder according to any of the preceding claims 2 and 3-6 as far as dependent upon claim 2,
**characterized by**
- a first elongated through-shaft (38, 138) and a second hollow elongated through-shaft (28),
- said first through-shaft (38, 138) being arranged within said second through-shaft (28) and extending co-axially therewith,
- said first and second through-shafts (28, 38) being operatively connected to a corresponding second rotatable tool part (27, 37; 127, 137) and to said corresponding drive means.

8. A condiment grinder according to the preceding claim,
**characterized in that**
- said second, hollow elongated through-shaft (28) comprises a first tool part (34) of a first grinding tool (32) and a second rotatable tool part (27) of a second grinding tool (22).

## Patentansprüche

1. Gewürzmühle (1, 100), umfassend ein Gehäuse (4, 104), aufweisend:
ein erstes Ende (7) und ein zweites Ende (6) und zwei Kammern (16, 20; 17, 30; 120, 130) für ein jeweiliges Gewürz,
ein erstes und ein zweites Mahlwerkzeug (22, 32; 122, 132), wobei jedes der Mahlwerkzeuge (22, 32; 122, 132) mit einer entsprechenden Kammer (16, 20; 17, 30; 120, 130) für ein jeweiliges Gewürz verbunden ist,
wobei die zwei Mahlwerkzeuge (22, 32; 122, 132) jeweils umfassen: einen ersten Werkzeugteil (24, 34; 124, 134) und einen zweiten Werkzeugteil (27, 37; 127, 137), wobei der zweite Werkzeugteil (27, 37; 127, 137) in Bezug zu dem ersten Werkzeugteil (24, 34; 124, 134) um eine Achse (40, 140) drehbar ist,
eine Treibeinrichtung (10, 110), die zum Treiben des zweiten Werkzeugteils (27, 37; 127, 137) eines ausgewählten der zwei Mahlwerkzeuge (26, 32; 126, 132) angepasst ist,
eine Auslasseinrichtung (8) für gemahlenes Gewürz, wobei die Auslasseinrichtung (8) an dem zweiten Ende (6) des Gehäuses (4, 104) angeordnet ist und einen ersten Austrag für gemahlenes Gewürz aus dem ersten Mahlwerkzeug (22, 122) und einen zweiten Austrag für gemahlenes Gewürz aus dem zweiten Mahlwerkzeug (32, 132) umfasst, wobei sich der erste und zweite Austrag jeweils entlang eines Kreisbogens erstrecken,
**dadurch gekennzeichnet, dass**
die Mahlwerkzeuge (22, 32, 122, 132) so angeordnet sind, dass sich die zweiten drehbaren Werkzeugteile (27, 37; 127, 137) um eine gemeinsame Achse (40, 140) drehen, und
der erste Austrag für gemahlenes Gewürz aus dem ersten Mahlwerkzeug (22, 122) sich entlang eines Kreisbogens mit einem größeren Durchmesser als der zweite Austrag für gemahlenes Gewürz aus dem zweiten Mahlwerkzeug (32, 132) erstreckt.

2. Gewürzmühle (1, 100), umfassend ein Gehäuse (4, 104), aufweisend:
ein erstes Ende (7) und ein zweites Ende (6) und zwei Kammern (16, 20; 17, 30; 120, 130) für ein jeweiliges Gewürz,
ein erstes und ein zweites Mahlwerkzeug (22, 32; 122, 132), wobei jedes der Mahlwerkzeuge (22, 32; 122, 132) mit einer entsprechenden Kammer (16, 20; 17, 30; 120, 130) für ein jeweiliges Gewürz verbunden ist,
wobei die zwei Mahlwerkzeuge (22, 32; 122, 132) jeweils umfassen: einen ersten Werkzeugteil (24, 34; 124, 134) und einen zweiten Werkzeugteil (27, 37; 127, 137), wobei der zweite Werkzeugteil (27, 37; 127, 137) in Bezug zu dem ersten Werkzeugteil (24, 34; 124, 134) um eine Achse (40, 140) drehbar ist,
wobei der erste und zweite Werkzeugteil zusammen eine im Wesentlichen kreisförmige Mahlzone definieren,
eine Treibeinrichtung (10, 110), die zum Treiben des zweiten Werkzeugteils (27, 37; 127, 137) eines ausgewählten der zwei Mahlwerkzeuge (26, 32; 126, 132) angepasst ist,
eine Auslasseinrichtung (8) für gemahlenes Gewürz, wobei die Auslasseinrichtung (8) unter den zwei Mahlwerkzeugen an dem zweiten Ende (6) des Gehäuses (4, 104) so angeordnet ist, dass gemahlenes Gewürz aus den zwei Kammern die Mühle an dem zweiten Ende verlassen kann,
**dadurch gekennzeichnet, dass**
die Mahlwerkzeuge (22, 32, 122, 132) so angeordnet sind, dass sich die zweiten drehbaren Werkzeugteile (27, 37; 127, 137) um eine gemeinsame Achse (40, 140) drehen, und
die im Wesentlichen kreisförmige Mahlzone des ersten Mahlwerkzeugs (22, 122) einen größeren Durchmesser aufweist als die im Wesentlichen kreisförmige Mahlzone des zweiten Mahlwerkzeugs (32, 132).

3. Gewürzmühle nach Anspruch 1 oder 2,
**dadurch gekennzeichnet, dass**
die Kammern (16, 20; 30; 120, 130) für ein jeweiliges Gewürz ringförmig sind.

4. Gewürzmühle nach einem der vorhergehenden Ansprüche,
**dadurch gekennzeichnet, dass**
das Gehäuse (4, 104) mindestens einen röhrenförmigen Teil (5) zur Aufnahme der Mahlwerkzeuge (22, 32; 122, 132) umfasst, wobei ein Deckelteil (10, 110) an dem ersten Ende (7) des Gehäuses (4, 104) angeordnet ist,
der Deckelteil (10, 110) eine Treibeinrichtung für mindestens eines von den zweiten drehbaren Werkzeugteilen (27, 37; 127, 137) bildet.

5. Gewürzmühle nach Anspruch 4, **dadurch gekennzeichnet, dass**
der Deckelteil (10, 110) eine Treibeinrichtung für zwei von den zweiten drehbaren Werkzeugteilen (27, 37; 127, 137) bildet.

6. Gewürzmühle nach Anspruch 5, **dadurch gekennzeichnet, dass**
der Deckelteil (10, 110) in Bezug zu dem röhrenförmigen Teil (5) drehbar ist,
die Auswähl von einem von den mindestens zwei Mahlwerkzeugen (22, 32; 122, 132) durch Auswählen der Drehrichtung des Deckelteils (10, 110) vorgenommen wird.

7. Gewürzmühle nach einem der vorangehenden Ansprüche 2 und 3 bis 6 soweit sie von Anspruch 2 abhängen,
**gekennzeichnet durch**
eine erste langgestreckte Durchgangswelle (38, 138) und eine zweite hohle langgestreckte Durchgangswelle (28),
wobei die erste Durchgangswelle (38, 138) innerhalb der zweiten Durchgangswelle (28) angeordnet ist und sich koaxial zu dieser erstreckt,
wobei die erste und zweite Durchgangswelle (28, 38) in Wirkverbindung mit einem entsprechenden zweiten drehbaren Werkzeugteil (27, 37; 127, 137) und mit der entsprechenden Treibeinrichtung stehen.

8. Gewürzmühle nach dem vorangehenden Anspruch,
**dadurch gekennzeichnet, dass**
die zweite hohle langgestreckte Durchgangswelle (28) einen ersten Werkzeugteil (34) eines ersten Mahlwerkzeugs (32) und einen zweiten drehbaren Werkzeugteil (27) eines zweiten Mahlwerkzeugs (22) umfasst.

## Revendications

1. Broyeur à condiments (1, 100) comprenant un boîtier (4, 104) ayant :
- une première extrémité (7) et une deuxième extrémité (6) et deux compartiments (16, 20 ; 17, 30 ; 120, 130) pour un condiment respectif,
- un premier et un deuxième outil de broyage (22, 32 ; 122, 132), chacun desdits outils de broyage (22, 32 ; 122, 132) étant associé à un compartiment correspondant (16, 20 ; 17, 30 ; 120, 130) pour un condiment respectif,
- lesdits deux outils de broyage (22, 32 ; 122, 132) comprenant chacun une première partie d'outil (24, 34 ; 124, 134) et une deuxième partie d'outil (27, 37 ; 127, 137), la deuxième partie d'outil (27, 37 ; 127, 137) étant capable de tourner autour d'un axe (40, 140) par rapport à la première partie d'outil (24, 34 ; 124, 134),
- des moyens d'entraînement (10, 110) adaptés pour entraîner la deuxième partie d'outil (27, 37 ; 127, 137) d'un outil choisi parmi lesdits deux outils de broyage (26, 32 ; 126, 132),
- des moyens de sortie (8) pour les condiments broyés, lesdits moyens de sortie (8) étant agencés à ladite deuxième extrémité (6) du boîtier (4, 104) et incluant une première évacuation pour le condiment broyé provenant dudit premier outil de broyage (22, 122) et une deuxième évacuation pour le condiment broyé provenant dudit deuxième outil de broyage (32, 132), ladite première et ladite deuxième évacuation s'étendant chacune le long d'un arc circulaire,
**caractérisé en ce que**
- lesdits outils de broyage (22, 32 ; 122, 132) sont agencés de telle façon que les deuxièmes parties d'outil rotatives (27, 37 ; 127, 137) tournent autour d'un axe commun (40, 140), et
- ladite première évacuation pour le condiment broyé provenant dudit premier outil de broyage (22, 122) s'étend le long d'un arc circulaire ayant un diamètre supérieur à ladite deuxième évacuation pour le condiment broyé provenant dudit deuxième outil de broyage (32, 132).

2. Broyeur à condiment (1, 100) comprenant un boîtier (4, 104) ayant :
- une première extrémité (7) et une deuxième extrémité (6) et deux compartiments (16, 20 ; 17, 30 ; 120, 130) pour un condiment respectif,
- un premier et un deuxième outil de broyage (22, 32 ; 122, 132), chacun desdits outils de broyage (22, 32 ; 122, 132) étant associé à un compartiment (16, 20 ; 17, 30 ; 120, 130) correspondant pour un condiment respectif,
- lesdits deux outils de broyage (22, 32 ; 122, 132) comprenant chacun une première partie d'outil (24, 34 ; 124, 134) et une deuxième partie d'outil (27, 37 ; 127, 137), la deuxième partie d'outil (27, 37 ; 127, 137) étant capable de tourner autour d'un axe (40, 140) par rapport à la première partie d'outil (24, 34 ; 124, 134),
- ladite première et ladite deuxième partie d'outil définissant ensemble une zone de broyage essentiellement circulaire,
- des moyens d'entraînement (10, 110) adaptés à entraîner la deuxième partie d'outil (27, 37 ; 127, 137) d'un outil choisi parmi lesdits deux outils de broyage (26, 32 ; 126, 132),
- des moyens de sortie (8) pour le condiment broyé, lesdits moyens de sortie (8) étant agencés au-dessous desdits deux outils de broyage, à ladite deuxième extrémité (6) du boîtier (4, 104), de manière que le condiment broyé provenant desdits deux compartiments puisse quitter ledit broyeur à ladite deuxième extrémité,
**caractérisé en ce que**
- lesdits outils de broyage (22, 32 ; 122, 132) sont agencés de manière que les deuxièmes parties d'outil rotatives (27, 37 ; 127, 137) tournent autour d'un axe commun (40, 140), et
- ladite zone de broyage essentiellement circulaire dudit premier outil de broyage (22, 122) a un diamètre supérieur à ladite zone de broyage essentiellement circulaire dudit deuxième outil de broyage (32, 132).

3. Broyeur à condiment selon l'une ou l'autre des revendications 1 et 2,
**caractérisé en ce que** :
- lesdits compartiments (16, 20 ; 30 ; 120, 130) pour un condiment respectif sont de forme annulaire.

4. Broyeur à condiment selon l'une quelconque des revendications précédentes, **caractérisé en ce que** :
- ledit boîtier (4, 104) comprend au moins une partie tubulaire (5) pour recevoir lesdits outils de broyage (22, 32 ; 122, 132), une partie formant couvercle (10, 110) étant agencée à ladite première extrémité (7) du boîtier (4, 104),
- ladite partie formant couvercle (10, 110) forme un moyen d'entraînement pour l'une au moins desdites deuxièmes parties d'outil rotatives (27, 37 ; 127, 137).

5. Broyeur à condiment selon la revendication 4, **caractérisé en ce que** :
- ladite partie formant couvercle (10, 110) forme un moyen d'entraînement pour deux desdites deuxièmes parties d'outil rotatives (27, 37 ; 127, 137).

6. Broyeur à condiment selon la revendication 5, **caractérisé en ce que** :
- ladite partie formant couvercle (10, 110) est capable de tourner par rapport à ladite partie tubulaire (5),
- ledit choix de l'un desdits au moins deux outils de broyage (22, 32 ; 122, 132) est fait en choisissant le sens de rotation de la partie formant couvercle (10, 110).

7. Broyeur à condiment selon l'une quelconque des revendications 2 et 3 à 6, prise en dépendance de la revendication 2, **caractérisé par** :
- un premier arbre traversant (38, 138) allongé et un deuxième arbre traversant (28) allongé creux,
- ledit premier arbre traversant (38, 138) est agencé à l'intérieur dudit deuxième arbre traversant (28) et s'étend coaxialement avec celui-ci, et
- ledit premier et ledit deuxième arbre traversant (28, 38) sont fonctionnellement connectés à une deuxième partie d'outil rotative (27, 37 ; 127, 137) correspondante et auxdits moyens d'entraînement correspondants.

8. Broyeur à condiment selon la revendication précédente, **caractérisé en ce que** :
- ledit deuxième arbre traversant allongé (28) creux comprend une première partie d'outil (34) d'un premier outil de broyage (32) et une deuxième partie d'outil rotative (27) d'un deuxième outil de broyage (22).
